# FASCICULE DE BREVET EUROPEEN

(11) **EP 2 069 159 B1**
(45) Date de publication et mention de la délivrance du brevet: **13.10.2010**
(21) Numéro de dépôt: 07823719.5
(22) Date de dépôt: 16.08.2007
(51) Int. Cl.: B60K 17/24

(54) **PALIER POUR LE GUIDAGE EN ROTATION D'UN ARBRE DE TRANSMISSION DE PUISSANCE DANS UN VEHICULE AUTOMOBILE A DEUX ESSIEUX MOTEURS**
LAGER ZUR DREHFÜHRUNG EINER KRAFTÜBERTRAGUNGSWELLE IN EINEM KRAFTFAHRZEUG MIT ZWEI GETRIEBENEN ACHSEN
BEARING FOR ROTATIONALLY GUIDING A POWER TRANSMISSION SHAFT IN A MOTOR VEHICLE WITH TWO DRIVEN AXLES

(30) Priorité: 04.10.2006 FR 0653611
(43) Date de publication de la demande: 17.06.2009
(73) Titulaire: Renault S.A.S., 92100 Boulogne-Billancourt (FR)
(72) Inventeur: HOTTEBART, Pascal, 95800 Cergy Saint Christophe (FR)
(86) Numéro de dépôt international: PCT/FR2007/051818
(87) Numéro de publication internationale: WO 2008/040888

(56) Documents cités:
- EP-A- 0 348 287
- JP-A- 5 147 448
- US-A- 4 690 238

## Description

L'invention concerne un palier pour le guidage d'un arbre de transmission de puissance dans un véhicule automobile, et plus particulièrement un palier pour le guidage en rotation d'un arbre de transmission de puissance vers un train de roues dans un véhicule automobile à deux essieux moteurs notamment à quatre roues motrices. La publication EP 0348 287 divulgue un palier d'après le préambule de la revendication 1.

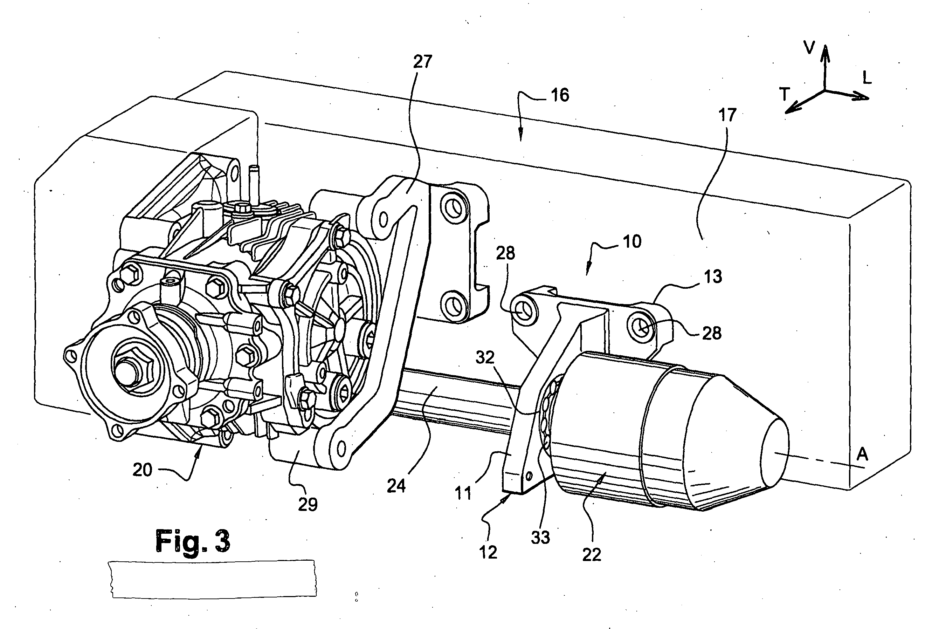

On a représenté à la figure 3, un palier de guidage 10 connu de l'état de la technique agencé sur un groupe motopropulseur 16 du véhicule automobile.

Un véhicule à quatre roues motrices comporte, de manière connue, un module 22 de transmission de puissance vers un train ou essieu avant et un module 20 de transmission de puissance vers un train ou essieu arrière

Ces deux modules 20 et 22 sont entraînés mécaniquement par le groupe motopropulseur 16, par l'intermédiaire d'un arbre de transmission de puissance 24 d'axe de rotation A.

Comme on peut le voir sur la figure 3, l'arbre de transmission de puissance 24 est guidé en rotation et soutenu au moyen du palier 10 comportant un corps 12 dont une partie d'embase 13 est apte à être fixée en appui sur une face 17 du groupe motopropulseur 16 du véhicule, et une partie de guidage 11 qui est traversée axialement à rotation par l'arbre de transmission 24.

L'arbre de transmission 24 traverse la partie de guidage 11 par un trou central 32 qui comporte un roulement 33 de manière à guider l'arbre de transmission en rotation.

Le palier 10 est fixé au groupe motopropulseur par la partie d'embase 13 qui comporte des trous 28 destinés à recevoir de moyens de fixation, comme par exemple des vis ou des brides de fixation.

Le module de transmission 20 pour le train arrière est fixé au moyen de tirants (non représenté) et d'une béquille 27 de support et de moyens de fixation 29 afin d'éviter que des sollicitations vibratoires ne provoque un désalignement de l'un ou l'autre des modules 20 ou 22.

Cette précaution est nécessaire pour le bon fonctionnement de tout véhicule à quatre roues motrices, cependant, elle requiert non seulement des pièces supplémentaires mais plusieurs opérations de montages, souvent délicates car devant être effectuées dans une zone difficile d'accès pour un opérateur.

Dans le but de répondre à cette problématique, la présente invention propose un palier pour le guidage en rotation d'un arbre de transmission de puissance vers un train de roues dans un véhicule automobile à deux essieux moteurs, notamment à quatre roues motrices, du type comportant un corps dont une partie d'embase est apte à être fixée sur le groupe motopropulseur du véhicule et dont une partie de guidage est traversée axialement à rotation par ledit arbre de transmission, caractérisé en ce que le corps comporte une partie de support qui est apte à être fixée sur un module de répartition de puissance entre les deux trains de roues du véhicule à quatre roues motrices.

Selon d'autres caractéristiques de l'invention :
- la partie d'embase est en forme d'une plaque parallèle à l'axe dudit arbre de transmission et la partie de support est en forme d'une plaque orthogonale à l'axe dudit arbre de transmission, et en ce que la plaque de support est traversée par ledit arbre ;
- la partie de guidage est en forme d'une plaque orthogonale à l'axe de l'arbre de transmission qui est décalée axialement par rapport à la partie de support et qui comporte un trou central qui loge un élément de guidage en rotation de l'arbre de transmission ;
- le corps comporte des ailes formant des raidisseurs qui s'étendent axialement entre les faces en vis à vis de la partie de guidage et de la partie de support en forme de plaques ;
- la partie d'embase comporte une face d'appui sur une portion en vis à vis du groupe motopropulseur et qui comporte des trous destinés à recevoir des moyens de fixation ;
- la partie de support délimite une face d'appui sur une portion en vis à vis du module de répartition au train arrière et qui comporte des trous destinés à recevoir des moyens de fixation.

D'autres caractéristiques et avantages de l'invention apparaîtront à la lecture de la description détaillée qui va suivre, pour la compréhension de laquelle on se reportera aux dessins en annexe dans lesquels :
- la figure 1 est une vue schématique en perspective qui représente un palier de guidage selon l'invention agencé sur le groupe motopropulseur d'un véhicule à quatre roues motrices ;

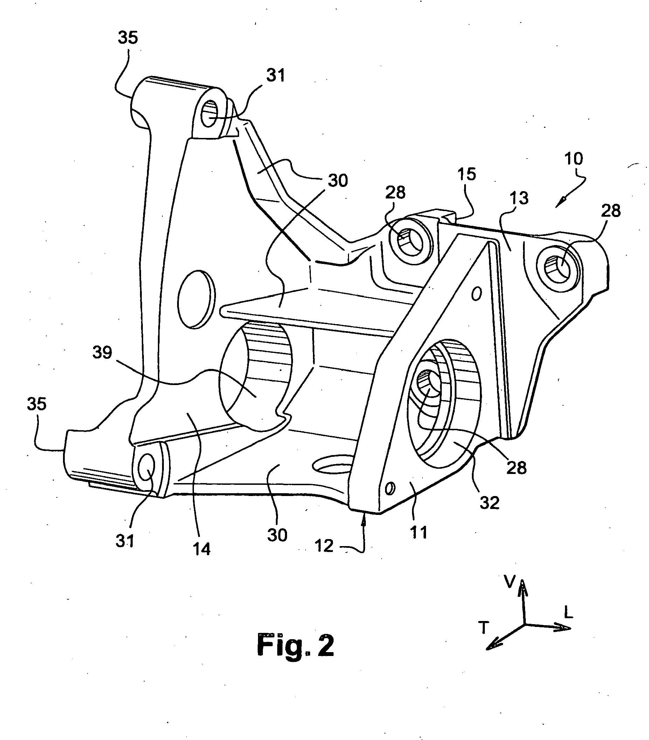

- la figure 2 est une vue schématique en perspective qui représente le palier de guidage selon l'invention ; et
- la figure 3 est une vue schématique en perspective, analogue à celle de la figure 1, qui représente un palier de guidage selon l'art antérieur.

Dans la description qui va suivre des éléments identiques, analogues ou similaires seront désignés par les mêmes chiffres ou lettres de référence.

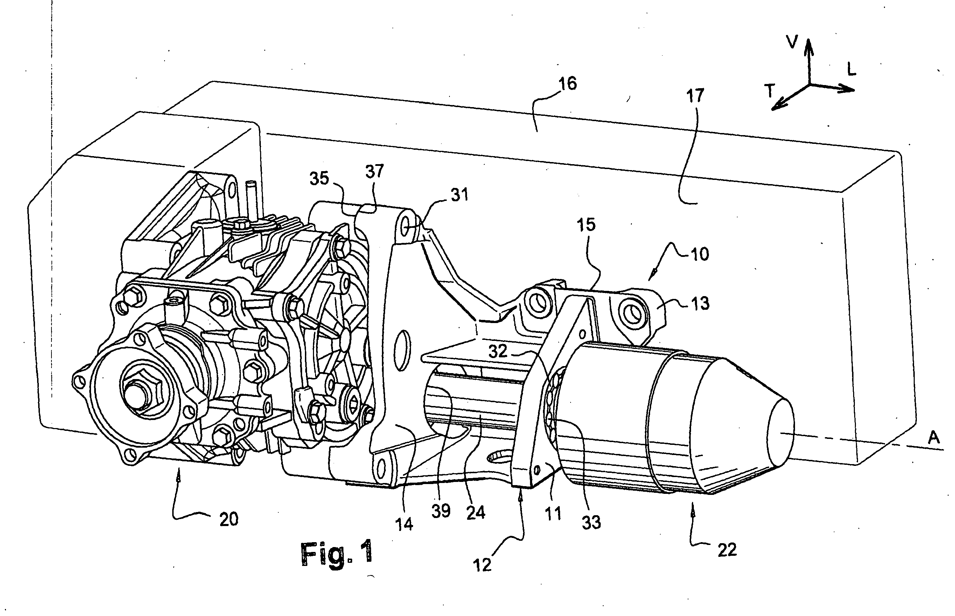

Dans la description et dans les revendications, on adoptera à titre non limitatif la terminologie axiale et orthogonale ou transversale en référence à l'axe A de l'arbre 24 de transmission de puissance représenté aux figures 1 et 3.

Le palier de guidage 10 est une pièce moulée qui comporte un corps qui comporte trois parties dont :
- la partie d'embase 13 qui est apte à être fixée sur le groupe motopropulseur 16 du véhicule ;
- la partie de guidage 11 qui est traversée axialement à rotation par l'arbre de transmission 24 ; et
- une partie de support 14, décalée axialement par rapport à la partie de guidage 11, qui est traversée par l'arbre de transmission 24 et qui est apte à être fixée sur une partie du module 20.

La partie d'embase 13 est en forme d'une plaque d'embase parallèle à l'axe A de l'arbre de transmission 24 et elle comporte une face 15 qui est destinée à être fixée en appui sur une face 17 en vis à vis du groupe motopropulseur 16.

La plaque d'embase 13 comporte des orifices 28 destinés à recevoir des moyens de fixation, comme par exemple des vis et/ou des brides de fixation (non représentées) de manière à maintenir fixe la plaque d'embase 13 contre le groupe motopropulseur 16.

La partie de guidage 11 est aussi en forme d'une plaque orthogonale à l'axe A de l'arbre de transmission 24. La partie de guidage 11 comporte le trou central 32 destiné à recevoir le roulement 33 afin de coopérer mécaniquement et de guider à rotation l'arbre de transmission de puissance 24.

La partie de support 14 selon l'invention est aussi en forme d'une plaque orthogonale à l'axe A de l'arbre de transmission 24 et elle est décalée axialement par rapport à la plaque de guidage 11, ces deux plaques 11 et 14 étant parallèles entre elles.

La plaque de support 14 est agencée en appui contre le module 20 de transmission de puissance vers le train arrière.

La plaque de support 14 comporte, plus particulièrement, une face 35 qui s'appuie sur une face 37 en vis à vis du module 20.

La plaque de support 14 comporte des orifices 31 destinées à recevoir des moyens de fixation, comme par exemple des vis et/ou des brides de fixation (non représentées) de manière à maintenir fixe la plaque de support 14 contre le module 20.

La partie de support 14 comporte aussi un trou central simple 39 destiné à permettre le passage axial de l'arbre de transmission 24 vers le module 20.

Avantageusement par rapport à l'art antérieur représenté à la figure 3, une seule pièce 10 permet de participer au maintien du module 20 de transmission vers le train arrière et de guider selon son axe A l'arbre de transmission de puissance 24.

Le palier de guidage 10 assure donc de manière économique les fonctions de guidage et de support.

Le palier de guidage 10 peut être réalisé en une seule pièce de fonderie que l'opérateur peut monter plus facilement sur le groupe motopropulseur 16 et le module 20.

Le palier de guidage comporte, de plus, des ailes 30 s'étendant axialement entre les faces en vis à vis du palier de guidage 11 et du palier de support 14.

Les ailes 30 assurent une fonction de raidisseurs de la structure du palier de guidage 10 et limitent fortement les sollicitations vibratoires que peuvent subir séparément un palier de guidage selon l'art antérieur et un module de transmission fixé au moyen de tirants et/ou de béquille.

Le nombre, l'emplacement ainsi que l'épaisseur des ailes 30 varient en fonction du groupe motopropulseur et du module de transmission.

On prévoit par exemple l'emplacement et le nombre de ces ailes 30 en fonction d'études des sollicitations vibratoires provoquées par le fonctionnement du groupe motopropulseur afin d'améliorer le comportement de l'ensemble en vibration.

Il est également important de placer ces ailes 30 de manière à non seulement ne pas gêner le passage et la rotation de l'arbre de transmission de puissance 24, mais aussi les manipulations de l'opérateur lors du montage ou du démontage d'un tel palier de guidage sur un groupe motopropulseur.

## Revendications

1. Palier (10), pour le guidage en rotation d'un arbre de transmission de puissance (24) vers un train de roues dans un véhicule automobile à deux essieux moteurs, notamment à quatre roues motrices, du type comportant un corps (12) dont une partie d'embase (13) est apte à être fixée sur le groupe motopropulseur (16) du véhicule et dont une partie de guidage (11) est traversée axialement à rotation par ledit arbre de transmission (24), **caractérisé en ce que** le corps (12) comporte une partie de support (14) qui est apte à être fixée sur un module de répartition de puissance (20) entre les deux trains de roues du véhicule à quatre roues motrices.

2. Palier (10) selon la revendication 1, **caractérisé en ce que** la partie d'embase (13) est en forme d'une plaque parallèle à l'axe dudit arbre de transmission (24) et **en ce que** la partie de support (14) est en forme d'une plaque orthogonale à l'axe dudit arbre de transmission (24), et **en ce que** la plaque de support (14) est traversée par ledit arbre (24).

3. Palier (10) selon l'une des revendications précédentes, **caractérisé en ce que** la partie de guidage (11) est en forme d'une plaque orthogonale à l'axe de l'arbre de transmission (24) qui est décalée axialement par rapport à la partie de support (14) et qui comporte un trou central (32) qui loge un élément de guidage en rotation de l'arbre de transmission (24).

4. Palier (10) selon l'une quelconque des revendications 2 ou 3, **caractérisé en ce que** le corps (12) comporte des ailes (30) formant des raidisseurs qui s'étendent axialement entre les faces en vis à vis de la partie de guidage (11) et de la partie de support (14) en forme de plaques.

5. Palier (10) selon l'une quelconque des revendications précédentes, **caractérisé en ce que** la partie d'embase (13) comporte une face d'appui (15) sur une portion en vis- à vis du groupe motopropulseur (16) et qui comporte des trous (28) destinés à recevoir des moyens de fixation.

6. Palier (10) selon l'une quelconque des revendications précédentes, **caractérisé en ce que** la partie de support (14) délimite une face d'appui (35) sur une portion (37) en vis à vis du module de répartition au train arrière (20) et qui comporte des trous (31) destinés à recevoir des moyens de fixation.

## Claims

1. Bearing (10) for guiding the rotation of a transmission shaft (24) that transmits power to a wheel set in a motor vehicle with two driven axles, particularly one with four-wheel drive, of the type comprising a body (12), a base part (13) of which is intended to be attached to the power plant (16) of the vehicle and a guide part (11) of which has the said transmission shaft (24) passing axially through it with the ability to rotate, **characterized in that** the body (12) comprises a support part (14) which can be attached to a power splitting module (20) that splits the power between the two wheel sets of the four-wheel drive vehicle.

2. Bearing (10) according to Claim 1, **characterized in that** the base part (13) is in the form of a plate parallel to the axis of the said transmission shaft (24) and **in that** the support part (14) is in the form of a plate orthogonal to the axis of the said transmission shaft (24), and **in that** the support plate (14) has the said shaft (24) passing through it.

3. Bearing (10) according to one of the preceding claims, **characterized in that** the guide part (11) is formed of a plate orthogonal to the axis of the transmission shaft (24) and which is axially offset in relation to the support part (14) and has a central hole (32) housing an element that guides the rotation of the transmission shaft (24).

4. Bearing (10) according to either one of Claims 2 and 3, **characterized in that** the body (12) comprises flanges (30) that act as stiffeners extending axially between the opposing faces of the plate-form guide part (11) and of the plate-form support part (14).

5. Bearing (10) according to any one of the preceding claims, **characterized in that** the base part (13) comprises a resting face (15) for resting against a portion of the power plant (16) that is located facing it and which has holes (28) intended to accept fasteners.

6. Bearing (10) according to any one of the preceding claims, **characterized in that** the support part (14) delimits a resting face (35) for resting against a portion (37) facing it belonging to the module splitting power to the rear wheel set (20) and which comprises holes (31) intended to accept fasteners.

## Patentansprüche

1. Lager (10) zur Drehführung einer Kraftübertragungswelle (24) zu einem Radsatz in einem Kraftfahrzeug mit zwei angetriebenen Achsen, insbesondere mit Vierradantrieb, jener Art, die einen Körper (12) aufweist, von dem ein Basisteil (13) an der Antriebseinheit (16) des Fahrzeugs befestigt werden kann und von dem ein Führungsteil (11) von der Kraftübertragungswelle (24) axial drehbar durchquert wird, **dadurch gekennzeichnet, dass** der Körper (12) einen Stützteil (14) aufweist, der an einem Leistungsverteilungsmodul (20) zwischen den beiden Radsätzen des Fahrzeugs mit Vierradantrieb befestigt werden kann.

2. Lager (10) nach Anspruch 1, **dadurch gekennzeichnet, dass** der Basisteil (13) die Form einer Platte, die sich parallel zur Achse der Kraftübertragungswelle (24) erstreckt, aufweist und dass der Stützteil (14) die Form einer Platte, die sich orthogonal zur Achse der Kraftübertragungswelle (24) erstreckt, aufweist, und dass die Stützplatte (14) von der Welle (24) durchquert wird.

3. Lager (10) nach einem der vorhergehenden Ansprüche, **dadurch gekennzeichnet, dass** der Führungsteil (11) die Form einer Platte aufweist, die sich orthogonal zur Achse der Kraftübertragungswelle (24) erstreckt, axial bezüglich des Stützteils (14) versetzt ist und ein mittleres Loch (32) aufweist, das ein Element zur Drehführung der Kraftübertragungswelle (24) aufnimmt.

4. Lager (10) nach Anspruch 2 oder 3, **dadurch gekennzeichnet, dass** der Körper (12) Schenkel (30) aufweist, die Versteifungen bilden, die sich axial zwischen den einander gegenüberliegenden Flächen des plattenförmigen Führungsteils (11) und Stützteils (14) erstrecken.

5. Lager (10) nach einem der vorhergehenden Ansprüche, **dadurch gekennzeichnet, dass** der Basisteil (13) eine Fläche (15) zur Anlage an einen Teil gegenüber der Antriebseinheit (16) aufweist und Löcher (28) enthält, die Befestigungsmittel aufnehmen sollen.

6. Lager (10) nach einem der vorhergehenden Ansprüche, **dadurch gekennzeichnet, dass** der Stützteil (14) eine Fläche (35) zur Anlage an einen Teil (37) gegenüber dem Modul (20) zur Verteilung an die Hinterachse begrenzt, der Löcher (31) aufweist, die Befestigungsmittel aufnehmen sollen.
